# EUROPÄISCHE PATENTSCHRIFT

(11) **EP 3 015 306 B1**
(45) Veröffentlichungstag und Bekanntmachung des Hinweises auf die Patenterteilung: **06.01.2021**
(21) Anmeldenummer: 14191336.8
(22) Anmeldetag: 31.10.2014
(51) Int. Cl.: B60K 37/06, G06F 3/01

(54) **Vorrichtung und Verfahren zur Bedienung einer Uhrenarmatur**
Device and method for operating a clock fitting
Dispositif et procédé de fonctionnement d'une armature de montre

(43) Veröffentlichungstag der Anmeldung: 04.05.2016
(73) Patentinhaber: Volkswagen Aktiengesellschaft, 38440 Wolfsburg (DE)
(72) Erfinder: Cengil, Sükrü, 30938 Burgwedel (DE); Wolf, Oliver, 38442 Wolfsburg (DE); Bachorski, Tomasz, 38176 Wendeburg (DE); Krawczyk, Christof, 39556 Bokensdorf (DE)

(56) Entgegenhaltungen:
- DE-A1-102008 048 825
- DE-A1-102008 051 756
- US-A1- 2009 319 181

## Beschreibung

### Stand der Technik

Die vorliegende Erfindung betrifft ein Armaturenbrett mit einer Vorrichtung zur Bedienung einer Uhrenarmatur für ein Armaturenbrett eines Fortbewegungsmittels. Insbesondere betrifft die vorliegende Erfindung eine verbesserte Nutzung von Fläche auf einem Armaturenbrett und die Verwirklichung von Anwenderwünschen bezüglich einer optischen Erscheinung einer Armatur.

Im Stand der Technik sind Fortbewegungsmittel bekannt, deren Interieur immer stärker durch die Implementierung digitaler Displays geprägt wird. Damit verbunden sind neue technische und funktionelle Möglichkeiten der Darbietung von Informationen. Aufgrund hoher Fertigungsvolumina stellen die Displays ("Bildschirme") auch eine Möglichkeit zur Kostenreduktion gegenüber mechanischen Anzeigeelementen dar. Zusätzlich kann die Erscheinung auf einem Bildschirm dargestellter Anzeigeelemente flexibler an Umgebungsbedingungen und geänderte Anwendervorlieben angepasst werden. Software-Updates können darüber hinaus Lösungen für bislang nicht erkannte oder nicht bestehende Probleme bieten.

US 2009/0319181 A1, DE 10 2008 051 756 A1 und DE10 2008 048 825 A1 offenbaren Bedienungen von Anwenderschnittstellen mittels berührungsloser Gesten.

Es ist eine Aufgabe der vorliegenden Erfindung, die Informationswiedergabe im Innenraum eines Fortbewegungsmittels flexibler zu gestalten.

Es ist eine weitere Aufgabe der vorliegenden Erfindung, die in Verbindung mit mechanischen Anzeigeelementen verbundenen Kosten zu senken und Funktionsausfälle zu vermeiden.

### Offenbarung der Erfindung

Die vorstehend identifizierten Aufgaben wird durch ein Armaturenbrett gemäß dem unabhängigen Anspruch 1 gelöst. Die abhängigen Ansprüche betreffen bevorzugte Ausgestaltungen.
Unter einer "Uhrenarmatur" sei ein Anzeigeelement verstanden, welches u.a. eine Wiedergabe einer aktuellen Uhrzeit ermöglicht und insbesondere zusätzlich zu einem Kombiinstrument und einem zentralen Informationsbildschirm in einem Fortbewegungsmittel vorgesehen werden kann. Insbesondere ist die Uhrenarmatur ihrer optischen Gestalt und Größe nach einem klassischen mechanischen Anzeigeelement ("Armatur") nachempfunden, so dass zumindest in einzelnen Betriebszuständen ein Ziffernblatt oder eine alternative Anzeige der Uhrzeit im Wesentlichen die optische Erscheinung der Uhrenarmatur ausmacht. Hierzu wird eine vordefinierte, frei im Raum ausgeführte (3D) Geste eines Eingabemittels (z.B. einer Hand eines Anwenders o.ä.) erkannt und im Ansprechen darauf eine optische Erscheinung der Uhrenarmatur angepasst. Die Erkennung kann sensorisch erfolgen. Die optische Erscheinung kann eine Gestaltänderung, eine Änderung der dargestellten Inhalte o.ä. umfassen. Auf diese Weise kann durch eine bequem und auch während der Fahrt mit dem Fortbewegungsmittel einfach ausführbare Geste verwendet werden, um den Informationsgehalt der Uhrenarmatur oder das bestehende Design zu ändern. Im Ergebnis kann die im Armaturenbrett des Fortbewegungsmittels bestehende Oberfläche genutzt werden, um mehr Informationen darzustellen und/oder bereits dargestellte Informationen in einer für den Anwender ansprechenden Art und Weise darzustellen. Zudem kann auf mechanische Anzeigeelemente (Zeiger, Ziffernblatt und Uhrwerk) verzichtet werden, welche insbesondere durch die Bewegungen des Fortbewegungsmittels im Betrieb einer erhöhten Belastung ausgesetzt sind. Fehlfunktionen sowie Klappergeräusche können auf diese Weise vermieden werden. Überdies ist eine Anpassung der Beleuchtung bzw. eine Darstellung im Nachtmodus (z.B. durch eine automatisch invertierte Darstellung) einfach möglich. Die Anpassung der optischen Erscheinung erfolgt mittels einer Anpassung eines Anzeigeinhaltes auf einem Bildschirm der Uhrenarmatur. Hierzu weist die Uhrenarmatur den Bildschirm auf. Indem der Bildschirm als Matrixanzeige ausgestaltet sein kann, ergibt sich die Möglichkeit, beliebige zusätzliche Informationen auf dem Bildschirm darzustellen. Die Uhrenarmatur ist eingerichtet, ein Ziffernblatt und/oder eine Animation eines Zeigers und/oder eine Darstellung einer stilisierten Mehrsegmentanzeige darzustellen.

Die Unteransprüche zeigen bevorzugte Weiterbildungen der Erfindung.

Zumindest eines der vorgenannten Elemente ist bezüglich der Bildschirmabmessungen so groß, dass es insbesondere mindestens ein Viertel, bevorzugt mindestens eine Hälfte einer entsprechenden Erstreckung des Bildschirms einnimmt.

Die Gestik kann beispielsweise eine Annäherungsgeste und/oder eine Wischgeste (ohne Kontakt mit einer Oberfläche der Uhrenarmatur) sein. Die Wischgeste kann im Wesentlichen horizontal oder vertikal orientiert sein. Im Falle vertikaler Wischgesten können Bewegungen in Richtung des Displays oder Bewegung parallel zur Oberfläche des Displays vordefiniert sein.

Über die vorgenannten Gesten lassen sich erfindungsgemäß Anpassungen der optischen Erscheinung steuern, durch welche der dargestellte Inhalt optisch geändert oder die in ihm enthaltenen Informationen geändert werden.

Je nach Geste kann eine Vielzahl unterschiedlicher (räumlich aufeinanderfolgend eingenommener) Positionen des Eingabemittels bezüglich der Armatur voneinander unterschieden werden und ein jeder Wechsel von einer ersten vordefinierten Position in eine zweite vordefinierte Position eine weitere Anpassung der optischen Erscheinung hervorrufen. Beispielsweise können unterschiedliche Oberflächen/Erscheinungen (englisch: "Skins") angeboten und durch ein Stoppen der verwendeten Geste bzw. ein Bewegung des Eingabemittels aus dem Erfassungsbereich heraus das aktuelle Skin vom Anwender bestätigt werden. Alternativ oder zusätzlich besteht die Möglichkeit, eine jede Annäherungsgeste durch eine vordefinierte Anpassung der optischen Erscheinung zu quittieren. Hierbei kann eine vordefinierte Abfolge unterschiedlicher Skins "durchgeschaltet" werden. Dies kann beispielsweise zyklisch und in einer vordefinierten Reihenfolge erfolgen. Diese vordefinierte Reihenfolge kann in Abhängigkeit einer Richtung einer ausgeführten Wischgeste auch umgekehrt durchlaufen werden. Entsprechendes gilt für unterschiedliche Informationsinhalte, welche zur Anzeige auf der Uhrenarmatur vorgesehen sind. Auf diese Weise ergibt sich eine rasche und intuitive Möglichkeit zur Anpassung der optischen Erscheinung der Uhrenarmatur.

Das Anpassen der optischen Erscheinung kann ein Darstellen bislang nicht angezeigter Informationen umfassen, wobei insbesondere ein Datum und/oder ein Kompass und/oder eine Temperaturanzeige und/oder ein Herstellerlogo und/oder ein aktuell gespielter Radiosender und/oder eine anstehende Aufgabe (z.B. eine Anruferinnerung, eine Gurt-anlegen-Erinnerung, eine Erinnerung bezüglich eines vergessenen Mobiltelefons, eine Meldung über das Vorhandensein einer ungelesenen E-Mail, eine Erinnerung an einen durchzuführenden Traktionsenergieaufnahmevorgang) und/oder eine Warnmeldung (z.B. ein Abstand zum vorausfahrenden Fahrzeug ist zu gering, eine Geschwindigkeitsbegrenzung wurde überschritten, oder ein Verkehrsstau behindert die Verwendung einer vorgesehenen Route) und/oder eine Fahrsituationsinformation (z.B. ein Abstandsmesser) der aktuellen optischen Erscheinung hinzugefügt werden, aus der aktuellen optischen Erscheinung entfernt werden oder in anderer Weise dargestellt werden, als dies vor dem erfolgten Erkennen der vordefinierten Geste der Fall war. Die vorstehenden Beispiele für Informationen, welche in der Uhrenarmatur angezeigt werden können, bilden lediglich eine Auswahl für all jene Informationen, welche innerhalb einer vergleichsweise kleinen Fläche unmissverständlich durch den Fahrer erfassbar dargestellt werden können.

Beispielsweise kann das Anpassen des Anzeigeinhalts auch ein Ausführen eines semantischen Zooms umfassen. Hierunter wird ein Vergrößern von Ziffern und/oder Buchstaben und/oder Sinnbildern (englisch: "icon") verstanden. Auf diese Weise kann der Anwender die Lesbarkeit dargestellter Inhalte bedarfsweise verbessern, während zu übrigen Zeitpunkten der Fokus auf einer optisch ansprechenden Darstellung der Uhrenarmatur liegen kann.

Mit anderen Worten wird ein Armaturenbrett eines Fortbewegungsmittels mit einer Vorrichtung zur Anzeige einer Uhrenarmatur vorgeschlagen. Die Vorrichtung umfasst einen Bildschirm, eine Erfassungseinrichtung und eine Verarbeitungseinrichtung. Der Bildschirm ist eingerichtet, die Uhrenarmatur zumindest anteilig darzustellen. Mit anderen Worten nimmt der Bildschirm einen wesentlichen Prozentsatz der Oberfläche der Uhrenarmatur ein. Insbesondere kann der gesamte Informationsinhalt der Uhrenarmatur mittels des Bildschirms dargestellt werden. Jedoch könnte die Uhrenarmatur auch durch Zeiger und ein Uhrwerk ergänzt werden, so dass der Bildschirm im Wesentlichen das Ziffernblatt und gegebenenfalls zusätzliche Informationen (z.B. ein Datum, einen Wochentag, anstehende Aufgabe, etc.) anzeigt. Die Erfassungseinrichtung ist eingerichtet, eine frei im Raum ausgeführte Geste (3D-Geste) eines Eingabemittels (z.B. einer Hand eines Anwenders) zu erfassen. Die Erfassungseinrichtung kann beispielsweise einen kapazitiven und/oder einen Infrarotsensor umfassen. Zusätzlich ist eine Verarbeitungseinheit vorgesehen und eingerichtet, im Ansprechen auf eine vordefinierte, frei im Raum ausgeführte Geste des Eingabemittels einem Anzeigeinhalt auf dem Bildschirm anzupassen. Die Verarbeitungseinheit kann einen programmierbaren Prozessor umfassen, welcher zusätzlich weitere Aufgaben innerhalb des Fortbewegungsmittels übernimmt. Die Verarbeitungseinheit kann als elektronisches Steuergerät verstanden werden. Sie kann einen Mikrocontroller, einen Nanocontroller o.ä., umfassen.

Die Uhrenarmatur ist eingerichtet, ein Ziffernblatt und/oder eine Animation eines Zeigers und/oder eine Darstellung einer stilisierten Mehrsegmentanzeige darzustellen. Zumindest eines der vorgenannten Elemente ist bezüglich der Bildschirmabmessungen so groß, dass es mindestens ein Viertel, bevorzugt mindestens eine Hälfte einer entsprechenden Erstreckung des Bildschirms einnimmt. Mit anderen Worten ist die Uhrenarmatur nicht als Bestandteil eines Kombiinstruments oder eines zentralen Informationsbildschirms zu verstehen, sondern weist einen separaten Bildschirm und insbesondere eine separate Erfassungseinrichtung auf. Beispielsweise kann der Bildschirm optisch kreisrund oder oval gegenüber einem Armaturenbrett des Fortbewegungsmittels abgegrenzt sein. Mit anderen Worten ist die Grundform der Uhrenarmatur rund oder oval. Diese Form kann durch ein der Uhrenarmatur zugeordnetes Blendenelement, welches ebenfalls kreisrund oder oval ausgeführt sein kann, betont werden. Zwischen der Oberfläche des Bildschirms und der Blende kann eine tubusförmige Struktur angeordnet sein, welche einen Blick auf solche Bereiche verhindert, welche jenseits der Blende liegen. Die vorstehend geschilderte Anordnung ermöglicht eine Verwendung eckiger Bildschirme, welche in höheren Stückzahlen (z.B. für Kombiinstrumente) gefertigt und daher kostengünstig angeboten werden. Die runde Form stellt jedoch ein intuitiv verständliches Merkmal für die meisten Anwender dafür dar, dass die Hauptaufgabe der Uhrenarmatur das Anzeigen der Uhrzeit ist. Da die Oberfläche der Uhrenarmatur bzw. ihres Bildschirms eine komfortable Durchführung und Erkennung von Wischgesten erschwert, kann die erfindungsgemäße Verwendung von 3D-Gesten den Anwenderkomfort dennoch sicherstellen.

Anders ausgedrückt wird ein Armaturenbrett für ein Fortbewegungsmittel vorgeschlagen, welches ein Kombiinstrument, ein Display eines Infotainment-Systems (zentraler Informationsbildschirm) und eine Vorrichtung gemäß dem zweitgenannten Erfindungsaspekt aufweist. Mit anderen Worten ist zusätzlich zum Kombiinstrument und dem zentralen Informationsbildschirm (zur Darstellung von Bordcomputer-Informationen, Musikwiedergabeelementen, etc.) auch ein Bildschirm einer Uhrenarmatur vorgesehen, welcher entsprechend dem erfindungsgemäßen Verfahren bedienbar ist.

Bevorzugt kann die Erfassungseinrichtung der Vorrichtung eingerichtet sein, eine bezüglich des Bildschirms der Vorrichtung ausgeführte Geste von einer bezüglich des Kombiinstrumentes oder bezüglich des zentralen Informationsbildschirms ausgeführten Geste des Anwenders zu unterscheiden. Auf diese Weise wird eine bezüglich des zentralen Informationsbildschirms bzw. des Kombiinstrumentes ausgeführte 3D-Geste nicht fälschlicherweise als Befehl zur Anpassung der optischen Erscheinung der Uhrenarmatur interpretiert.

Gemäß einem weiteren Aspekt der vorliegenden Erfindung wird ein Fortbewegungsmittel (z.B. ein Fahrzeug, ein Flugzeug o.ä.) vorgeschlagen, welches eine Vorrichtung gemäß dem zweitgenannten Erfindungsaspekt umfasst. Dabei kann die Anordnung insbesondere für den Führer des Fortbewegungsmittels vorgesehen sein, mittels welcher der Führer während der Führung des Fortbewegungsmittels mit dem Fortbewegungsmittel und der erfindungsgemäßen Vorrichtung kommunizieren kann. Die Merkmale, Merkmalskombinationen sowie die sich aus diesen ergebenden Vorteile entsprechen den in Verbindung mit dem erst- und zweitgenannten Erfindungsaspekt ausgeführten derart ersichtlich, dass zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Komponenten eines Ausführungsbeispiels einer erfindungsgemäßen Vorrichtung in einem Ausführungsbeispiel eines erfindungsgemäßen Armaturenbrettes;
- Figur 2: eine Prinzipskizze zur Durchführung eines semantischen Zooms in einem Ausführungsbeispiel der erfindungsgemäßen Vorrichtung;
- Figur 3: eine Prinzipskizze zur Animation eines Wechsels angezeigter Informationen in einem Ausführungsbeispiel der erfindungsgemäßen Vorrichtung;
- Figur 4: eine Prinzipskizze zur Animation eines Wechsels angezeigter Informationen in einem Ausführungsbeispiel der erfindungsgemäßen Vorrichtung;
- Figur 5: eine Prinzipskizze zur Animation eines Wechsels angezeigter Informationen in einem Ausführungsbeispiel der erfindungsgemäßen Vorrichtung;
- Figur 6: eine Prinzipskizze zur Veranschaulichung eines Wechsels von einer Uhrzeitanzeige zu einer Kompassdarstellung in einem Ausführungsbeispiel der erfindungsgemäßen Vorrichtung;
- Figur 7: eine Prinzipskizze zur Veranschaulichung eines Wechsels von einer Kompassdarstellung zu einer Uhrzeitanzeige in einem Ausführungsbeispiel der erfindungsgemäßen Vorrichtung;
- Figur 8: eine Prinzipskizze zur Veranschaulichung einer Abfolge von Bedienhandlungen zur Durchführung eines Wechsels von einer Uhrzeitanzeige über eine Kompassdarstellung zu einer Temperaturanzeige in einem Ausführungsbeispiel der erfindungsgemäßen Vorrichtung;
- Figur 9: eine Prinzipskizze zur Ausführung eines Wechsels von einer Uhrzeitanzeige über eine Datumsdarstellung bis hin zu einer Temperaturanzeige in einem Ausführungsbeispiel der erfindungsgemäßen Vorrichtung;
- Figur 10: Gestaltungsbeispiele unterschiedlicher Anzeigen (englisch: "Screenshots") unterschiedlicher Ausführungsbeispiele einer erfindungsgemäßen Uhrenarmatur; und
- Figur 11: ein Flussdiagramm veranschaulichend die Verwendung eines Ausführungsbeispiels.

### Ausführungsformen der Erfindung

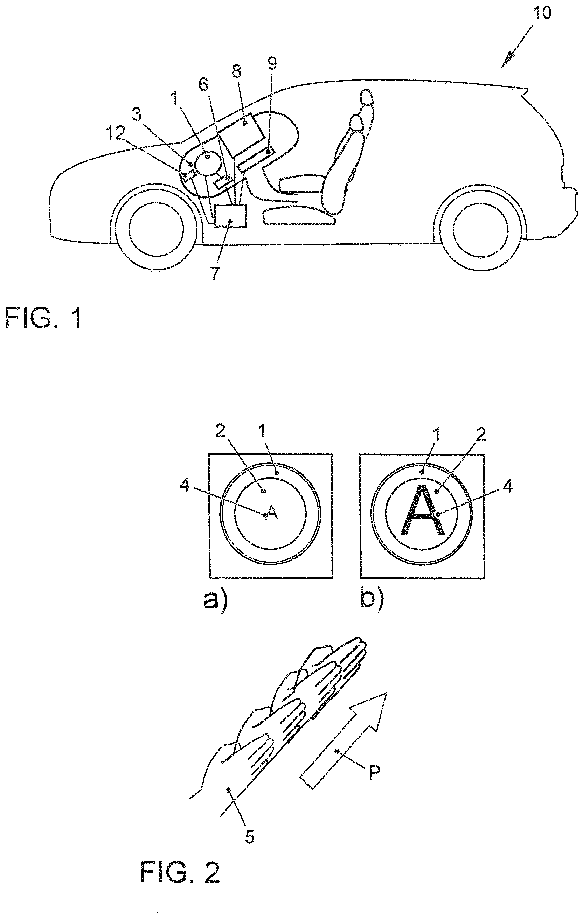

Figur 1 zeigt einen PKW 10 als erfindungsgemäß ausgestaltetes Fortbewegungsmittel, in welchem ein Ausführungsbeispiel einer erfindungsgemäßen Vorrichtung vorgesehen ist. In einem Armaturenbrett 3 sind ein Kombiinstrument 12 und ein zentrales Informationsdisplay 8 mit einer Annäherungssensorik 9 vorgesehen. Die vorgenannten Elemente sind informationstechnisch mit einem elektronischen Steuergerät 7 als Verarbeitungseinheit verbunden. Zusätzlich ist im Armaturenbrett 3 ein Bildschirm 1 einer Uhrenarmatur vorgesehen und informationstechnisch ebenfalls an das elektronische Steuergerät 7 angeschlossen. Die erfindungsgemäße Vorrichtung verfügt über eine unterhalb des Bildschirms 1 angeordnete Infrarot-LED-Leiste 6 als Erfassungseinrichtung, mittels welcher die erfindungsgemäße Vorrichtung frei im Raum ausgeführte 3D-Gesten erfassen und dem elektronischen Steuergerät 7 melden kann.

Figur 2 zeigt eine Annäherungsgeste einer Hand 5 als Eingabemittel eines Anwenders, welche in Richtung eines Pfeils P in Richtung eines Bildschirms 1 einer erfindungsgemäßen Vorrichtung geführt wird. Die mittels des Bildschirms 1 dargestellte Uhrenarmatur 2 weist einen stilistisch durch den Buchstaben "A" (Bezugszeichen 4) dargestellten Informationsgehalt dar (Teilfigur a)). Im Ansprechen auf die durchgeführte Annäherungsgeste wird in Teilfigur b) der Informationsgehalt 4 semantisch vergrößert ("semantischer Zoom") dargestellt. Dies erhöht die Lesbarkeit für den Anwender, ohne dass der Anwender den Kopf selbst in Richtung der Vorrichtung bewegen muss.

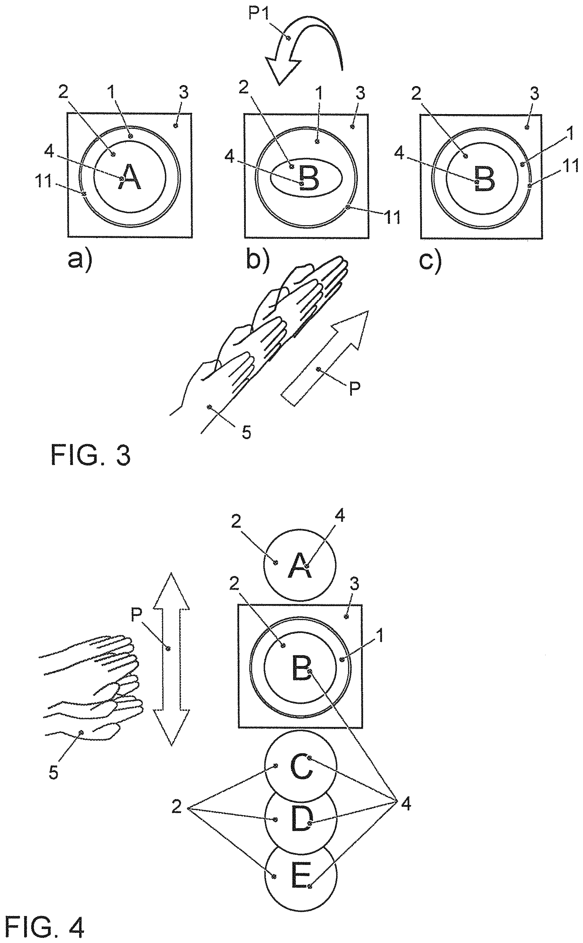

Figur 3 zeigt Schritte einer Animation zur Anpassung eines Informationsgehaltes 4, welche nacheinander im Ansprechen auf eine Annäherungsgeste einer Hand 5 eines Anwenders in Richtung eines Pfeils P ausgeführt bzw. dargestellt werden. Im Verlaufe der Bewegung der Hand 5 in Richtung des Bildschirms 1 der Vorrichtung wendet sich ein als Teil der Uhrenarmatur 2 dargestelltes Kreisscheibenelement, auf welchem sich ein stilisierter Inhalt "A" (Bezugszeichen 4) befindet, um eine horizontale und in der Zeichnungsebene liegende Achse in Richtung eines Pfeils P1 (Teilfiguren a) und b)). Im Ergebnis wird die in Teilfigur c) gezeigte optische Erscheinung dargestellt, in welcher die optisch anders gestaltete Rückseite des Kreisscheibenelements mit dem stilisierten Inhalt "B" (Bezugszeichen 4) dargestellt wird. Optisch wird der Bildschirm 1 durch eine runde Blende 11 gegenüber dem gewölbt ausgeführten Armaturenbrett 3 abgegrenzt. Die Blende 11 kann beispielsweise eine gegenüber dem Armaturenbrett 3 optisch abgesetzte Oberflächengestaltung (z.B. Klavierlack-Optik, verchromt, o.ä.) aufweisen.

Figur 4 zeigt eine alternative Animation zur Anpassung in dem Uhrenelement 2 dargestellter Informationen 4. Durch eine vertikale Geste der Hand 5 des Anwenders entlang eines Doppelpfeils P werden Kreisscheibenelemente unterschiedlichen Inhaltes (stilisiert durch die Buchstaben "A", "B", "C", "D" und "E") repräsentiert. Senkt der Anwender seine Hand 5, wird aus der dargestellten Position zur Anzeige des stilisierten Inhaltes "A" (Bezugszeichen 4) gewechselt. Hierbei wird die Kreisscheibe mit dem durch "B" repräsentierten Inhalt nach unten bewegt und die Kreisscheibe mit dem durch "A" repräsentierten Inhalt von oben in den Bildschirm 1 eingeschoben. Ein entsprechendes Szenario vollzieht sich in umgekehrter Richtung bei einer Aufwärtsbewegung der Hand des Anwenders 5. Je weiter der Anwender seine Hand anhebt, desto mehr Inhalte 4 werden nacheinander von unten in den Bildschirm 1 eingeschoben und anschließend ebenfalls nach oben aus dem Bildschirm 1 entfernt.

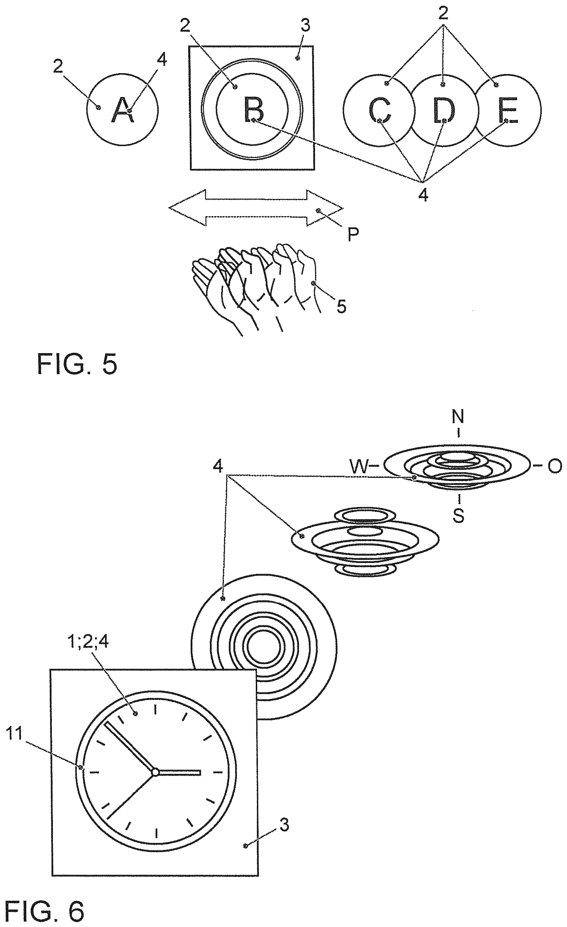

Figur 5 zeigt eine horizontale Variante des in Figur 4 dargestellten vertikalen Bedienschrittes.

Figur 6 zeigt die Verwendung einer Annäherungsgeste mittels einer Hand 5 eines Anwenders zum Umschalten eines Anzeigeinhaltes 4, umfassend ein Ziffernblatt und Zeiger einer Uhrenarmatur 2 zur Erzeugung einer Kompassdarstellung. Hierzu führt der Anwender mit seiner Hand 5 eine Annäherungsgeste entlang des Pfeils P in Richtung des Bildschirms 1 aus. Hierbei verschwinden die Zeiger und die Stundenmarkierungen, das Ziffernblatt wird in kreisringförmige Elemente zerlegt, welche anschließend um 90° in die Horizontale gedreht, entlang einer vertikalen Achse relativ zueinander verschoben und mit Markierungen für die Himmelsrichtungen versehen werden.

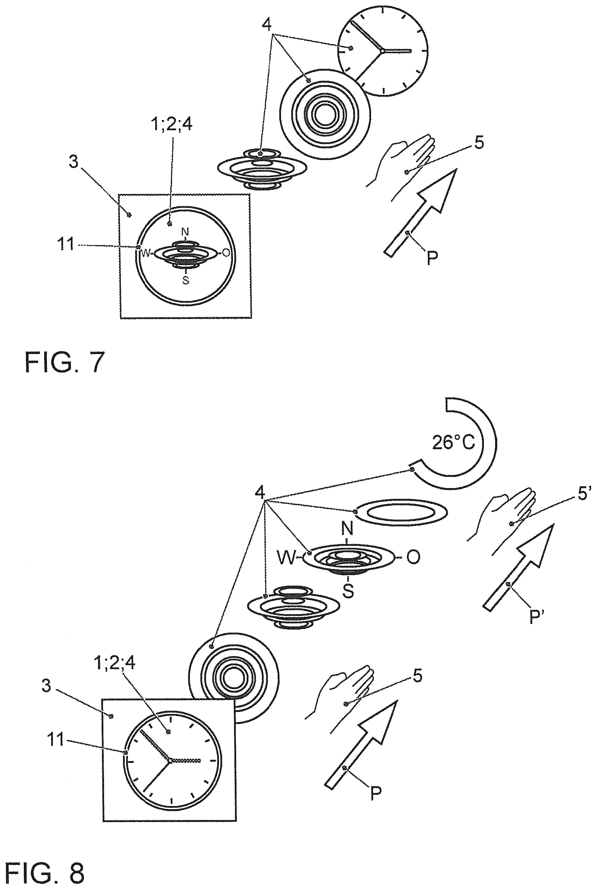

Figur 7 zeigt einen Animationsablauf für den Fall, dass der Anwender mit seiner Hand 5 erneut die in Verbindung mit Figur 6 diskutierte Geste ausführt. Hierbei werden die in Figur 6 dargestellten Animationsschritte in umgekehrter Richtung ausgeführt, so dass der Anwender von einer Kompassdarstellung zu einer Anzeige einer analogen Uhr zurückkehrt.

Figur 8 zeigt die Möglichkeit einer fortgesetzten Ausführung einer Annäherungsgeste einer Hand 5 bzw. 5' entlang zweier Pfeile P bzw. P'. Während im Ansprechen auf den ersten Teil der Geste der Hand 5 der in Figur 6 dargestellte Wechsel zu einer Kompassdarstellung erfolgt, wird bei fortgesetzter Geste der Hand 5' weiter zu einer Temperaturdarstellung gewechselt, indem zunächst die Himmelsrichtungsmarkierungen bzw. -beschriftungen entfernt, sämtliche innerhalb des äußeren Rings enthaltene Ringscheiben ausgeblendet und anschließend der äußerste Ring in eine vertikale Position gebracht wird. Schließlich wird die Temperatur (26°C) angezeigt und durch Ausblenden eines Ringsegmentes zusätzlich versinnbildlicht.

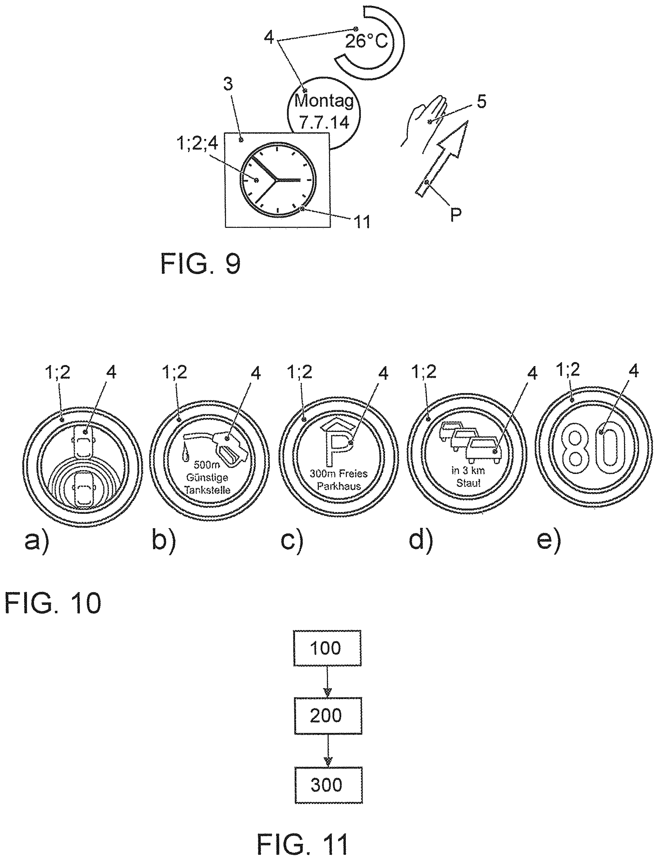

Figur 9 zeigt ein Ausführungsbeispiel für einen Bedienschritt einer Hand 5 in Richtung eines Pfeils P (eine Annäherungsgeste), im Ansprechen auf welchen ein kontinuierlicher Wechsel eines Inhaltes 4 über eine Datumsdarstellung (Montag, der 07.07.2014) zu der in Verbindung mit Figur 8 diskutierten Temperaturdarstellung gewechselt wird. Im Gegensatz zur in Figur 8 dargestellten Bedienhandlung hält der Anwender seine Hand 5 solange in einer angenäherten Haltung, bis der (kontinuierlich gewechselte) Inhalt 4 seinem Wunscherscheinungsbild entspricht. Anschließend verlässt der Anwender den Annäherungsbereich im Wesentlichen senkrecht zur Richtung des Pfeils P, um die dargestellte Anzeige zu bestätigen.

Figur 10 zeigt Beispiele für optische Erscheinungen der Uhrenarmatur 2 bzw. Beispiele für Darstellungen unterschiedlicher Inhalte 4. Es zeigen a) ein Piktogramm veranschaulichend eine Abstandswarnung, b) ein Piktogramm zur Empfehlung einer günstigen Energieaufnahmestation, c) ein Piktogramm zur Empfehlung für eine nahegelegene Parkmöglichkeit, d) ein Piktogramm veranschaulichend einen vorausliegenden Stau, und e) ein Piktogramm, veranschaulichend eine aktuell bestehende Geschwindigkeitsbeschränkung.

Figur 11 zeigt Schritte bei der Verwendung eines Ausführungsbeispiels eines erfindungsgemäßen Armaturenbrettes eines Fortbewegungsmittels. In Schritt 100 wird eine Darstellung einer analogen Uhr (umfassend ein Ziffernblatt und Zeiger) auf dem Bildschirm einer erfindungsgemäßen Vorrichtung angezeigt. In Schritt 200 wird eine vordefinierte frei im Raum ausgeführte 3D-Geste in Form einer Wischgeste eines Eingabemittels erkannt. Das Eingabemittel kann beispielsweise die Hand eines Anwenders ein, welche sich parallel zur Oberfläche eines von der Uhrenarmatur umfassten Bildschirms bewegt. Im Ansprechen darauf wird in Schritt 300 eine optische Erscheinung der Uhrenarmatur angepasst. Hierbei wird sowohl der Informationsgehalt als auch die optische Gestaltung der Uhrenarmatur verändert.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Bildschirm
- 2: Uhrenarmatur
- 3: Armaturenbrett
- 4: Inhalt
- 5: Hand des Anwenders
- 6: Infrarot-LED-Leiste
- 7: elektronisches Steuergerät
- 8: zentraler Informationsbildschirm
- 9: Erfassungseinheit
- 10: PKW
- 11: Blende
- 12: Kombiinstrument
- 100, 200, 300: Verfahrensschritte
- P, P1, P': Pfeile

## Patentansprüche

1. Armaturenbrett für ein Fortbewegungsmittel (10) umfassend
- ein Kombiinstrument (12),
- ein Display (8) eines Infotainment-Systems und
- eine Vorrichtung zur Anzeige einer Uhrenarmatur (2) , wobei die Vorrichtung umfasst:
- einen Bildschirm (1),
- eine Erfassungseinrichtung (6) und
- eine Verarbeitungseinheit (7), wobei
- der Bildschirm (1) optisch kreisrund oder oval gegenüber dem Armaturenbrett (3) des Fortbewegungsmittels (10) abgegrenzt und eingerichtet ist, die Uhrenarmatur (2) zumindest anteilig darzustellen, , wobei
- die Erfassungseinrichtung (6) eingerichtet ist, eine frei im Raum ausgeführte Geste eines Eingabemittels (5) zu erfassen und
- eine bezüglich des Bildschirms (1) ausgeführte Geste von einer bezüglich des Kombiinstrumentes (12) oder des Displays (8) ausgeführten Geste des Anwenders zu unterscheiden, und
- die Verarbeitungseinheit (7) eingerichtet ist, im Ansprechen auf eine vordefinierte, frei im Raum ausgeführte Geste einen Anzeigeinhalt (4) auf dem Bildschirm (1) anzupassen.

2. Armaturenbrett nach Anspruch 1, wobei die Uhrenarmatur (2) eingerichtet ist, ein Ziffernblatt und/oder eine Animation eines Zeigers und/oder eine Darstellung einer stilisierten Mehrsegmentanzeige aufweist, welche bzw. welches insbesondere eine längste Erstreckung aufweist, welche größer als ein Viertel, bevorzugt größer als eine Hälfte einer entsprechenden Erstreckung des Bildschirms (1) ist.

3. Armaturenbrett nach Anspruch 1 oder 2, wobei der Bildschirm (1) durch eine kreisrunde oder ovale Blende (11) gesäumt ist, welche insbesondere einer gewölbten Oberfläche folgt.

4. Fortbewegungsmittel, insbesondere ein PKW, ein Transporter, ein LKW, ein Luft- und/oder Wasserfahrzeug, umfassend ein Armaturenbrett nach einem der Ansprüche 1 bis 3.

## Claims

1. Instrument panel for a means of transportation (10), comprising
- an instrument cluster (12),
- a display (8) of an infotainment system, and
- an apparatus for displaying a clock fitting (2), wherein the apparatus comprises:
- a screen (1),
- a detection device (6), and
- a processing unit (7), wherein
- the screen (1) is delimited optically in a circular or oval manner relative to the instrument panel (3) of the means of transportation (10) and is configured to depict the clock fitting (2) at least partially, wherein
- the detection device (6) is configured to detect a gesture of an input means (5) freely performed in space, and
- to differentiate a gesture executed with respect to the screen (1) from a gesture of the user executed with respect to the instrument cluster (12) or the display (8), and
- the processing unit (7) is configured to adapt a display content (4) on the screen (1) in response to a predefined gesture that is freely executed in space.

2. Instrument panel according to claim 1, wherein the clock fitting (2) is configured, has a dial and/or an animation of a pointer and/or a representation of a stylized multi-segment display which in particular has a maximum extent that is more than one quarter, preferably more than one half, of a corresponding extent of the screen (1).

3. Instrument panel according to claim 1 or 2, wherein the screen (1) is bordered by a circular or oval aperture (11) which in particular follows a curved surface.

4. Means of transportation, in particular a passenger vehicle, a truck, an aircraft and/or a watercraft, comprising an instrument panel according to any of claims 1 to 3.

## Revendications

1. Tableau de bord pour un moyen de déplacement (10) comprenant
- un instrument combiné (12),
- un affichage (8) d'un système d'info-divertissement et
- un dispositif pour l'affichage d'une armature de montre (2), le dispositif comprenant :
- un écran (1),
- un dispositif de détection (6) et
- une unité de traitement (7),
- l'écran (1) étant limité optiquement de forme circulaire ou ovale par rapport au tableau de bord (3) du moyen de déplacement (10) et étant conçu pour représenter au moins proportionnellement l'armature de montre (2),
- le dispositif de détection (6) étant conçu pour détecter un geste d'un moyen de saisie (5) effectué librement dans l'espace et
- pour établir une distinction entre un geste effectué par rapport à l'écran (1) et un geste effectué par l'utilisateur par rapport à l'instrument combiné (12) ou à l'affichage (8), et
- l'unité de traitement (7) étant conçue pour adapter un contenu d'affichage (4) sur l'écran (1), en réponse à un geste prédéfini effectué librement dans l'espace.

2. Tableau de bord selon la revendication 1, dans lequel l'armature de montre (2) est conçue pour présenter un cadran et/ou une animation d'une aiguille et/ou une représentation d'un affichage à segments multiples stylisé, laquelle ou lequel présente en particulier une extension plus longue, laquelle est supérieure à un quart, de préférence supérieure à la moitié d'une extension correspondante de l'écran (1).

3. Tableau de bord selon la revendication 1 ou 2, dans lequel l'écran (1) est bordé par un diaphragme (11) circulaire ou ovale, lequel suit en particulier une surface bombée.

4. Moyen de déplacement, en particulier une voiture particulière, un transporteur, un avion et/ou une embarcation, comprenant un tableau de bord selon l'une quelconque des revendications 1 à 3.
